# EUROPEAN PATENT APPLICATION

(11) **EP 4 629 462 A1**
(43) Date of publication of application: **08.10.2025**
(21) Application number: 25166568.3
(22) Date of filing: 27.03.2025
(51) Int. Cl.: H02J 1/10

(54) **POWER SUPPLY SYSTEM**

(30) Priority: 27.03.2024 CN 202410373291
(71) Applicant: Huawei Digital Power Technologies Co., Ltd., Shenzhen, Guangdong 518043 (CN)
(72) Inventor: HU, Xing, Shenzhen 518043 (CN); LI, Wuying, Shenzhen 518043 (CN); TANG, Yunyu, Shenzhen 518043 (CN); ZHAN, Jinxiang, Shenzhen 518043 (CN); SHI, Lei, Shenzhen 518043 (CN); YU, Xiang, Shenzhen 518043 (CN)
(74) Representative: Gill Jennings & Every LLP

(57) **Abstract**

This application provides a power supply system. The power supply system includes a plurality of energy storage units and a plurality of power converters, each energy storage unit is electrically connected to at least one corresponding power converter, the energy storage unit includes a direct current power supply and a first controller, and the power converter includes a power conversion circuit and a second controller. In the energy storage unit, the direct current power supply is configured to output an electrical signal to the power conversion circuit in the power converter corresponding to the energy storage unit. In the power converter, the second controller is configured to obtain a first electrical signal change rule of the electrical signal received by the power conversion circuit, and send, through a communication connection, the first electrical signal change rule to the first controller that is communicatively connected to the second controller. In the energy storage unit, the first controller is configured to: obtain a first electrical signal change rule of the electrical signal output by the direct current power supply, and when not receiving first electrical signal change rule sent by the second controller that is communicatively connected to the first controller, output a signal indicating a communication connection error.

## Description

### TECHNICAL FIELD

This application relates to the power electronics field, and in particular, to a power supply system.

### BACKGROUND

In an energy storage power supply system, one battery cluster is connected to a plurality of converters through power cables, and outputs direct currents through the power cables. In addition, the battery cluster is further connected to the converter through a communication cable, to transmit information such as a power scheduling instruction between the battery cluster and the converter. Currently, both the power cable and the communication cable between the battery cluster and the converter are routed in parallel through a ground trench, and consequently, a connection error may occur in the power cable and the communication cable. In other words, the battery cluster is connected to the converter through the power cable, but the battery cluster is connected to another converter through the communication cable. When power cables and communication cables between the battery clusters and the converters incorrectly match and are incorrectly connected, the battery clusters cannot normally communicate with the corresponding converters, and the battery cluster cannot correctly schedule the converter to perform charging and discharging. In the existing energy storage power supply system, when a connection error occurs in the power cables and the communication cables between the battery clusters and the converters, connections between the battery clusters and the converters are manually checked one by one. Cable checking is labor-consuming, time-consuming, and not efficient.

### SUMMARY

Embodiments of this application provide a power supply system, to check communication connections in the power supply system without additional hardware. Communication connection check has high efficiency and accuracy.

According to a first aspect, this application provides a power supply system. The power supply system includes a plurality of energy storage units and a plurality of power converters, each energy storage unit is electrically connected to at least one corresponding power converter, each energy storage unit includes a direct current power supply and a first controller, and each power converter includes a power conversion circuit and a second controller. In the energy storage unit, the direct current power supply is configured to output an electrical signal to the power conversion circuit in the power converter corresponding to the energy storage unit. In the power converter, the second controller is configured to obtain a first electrical signal change rule of the electrical signal received by the power conversion circuit, and send, through a communication connection, the first electrical signal change rule to the first controller that is communicatively connected to the second controller. In the energy storage unit, the first controller is configured to: obtain a first electrical signal change rule of the electrical signal output by the direct current power supply, and when not receiving the first electrical signal change rule sent by the second controller that is communicatively connected to the first controller, output a signal indicating a communication connection error.

In this application, the direct current power supply in the energy storage unit is configured to output the electrical signal to the power conversion circuit in the power converter corresponding to the energy storage unit. The electrical signal output by the direct current power supply may be a plurality of types of information such as a voltage signal or a current signal. In the power converter, the second controller is configured to obtain the first electrical signal change rule of the electrical signal received by the power conversion circuit, and send, through the communication connection, the first electrical signal change rule to the first controller that is communicatively connected to the second controller. It may be understood that the first electrical signal change rule may be that the first controller in the energy storage unit controls an action of the switch included in the energy storage unit, so that the electrical signal output by the direct current power supply to the power conversion circuit in the power converter corresponding to the energy storage unit changes according to the first electrical signal change rule. Alternatively, the first electrical signal change rule may be that the second controller in the power converter controls an action of the switch included in the power conversion circuit, so that the electrical signal output by the direct current power supply to the power conversion circuit in the power converter corresponding to the energy storage unit changes according to the first electrical signal change rule. The first electrical signal change rule may be a change rule of a frequency of a voltage, a frequency of a current, a magnitude of a current, or the like. Further, in the energy storage unit, the first controller is configured to: obtain the first electrical signal change rule of the electrical signal output by the direct current power supply, and when not receiving the first electrical signal change rule sent by the second controller that is communicatively connected to the first controller, determine that a communication connection error occurs, and output the signal indicating a communication connection error. This avoids checking communication connections between the energy storage units and the power converters one by one, and greatly improves communication connection checking efficiency. In addition, no additional hardware is required, and normal communication between other devices is not affected, so that communication connection checking accuracy is high.

In a possible implementation, each energy storage unit includes a first switch, and in the energy storage unit, the direct current power supply is configured to output, via the first switch, a direct current voltage to the power conversion circuit in the power converter corresponding to the energy storage unit. In the energy storage unit, the first controller is configured to control the first switch to be turned on or off, so that the direct current voltage output by the direct current power supply changes according to a first voltage change rule. In another energy storage unit in the plurality of energy storage units, the first controller controls the first switch to be turned off, so that the another energy storage unit in the plurality of energy storage units does not output a direct current voltage, or controls the first switch to be turned on or off, so that a direct current voltage output by the another energy storage unit in the plurality of energy storage units changes according to another voltage change rule. In the power converter, the second controller is configured to obtain the first voltage change rule received by the power conversion circuit, and send, through the communication connection, the first voltage change rule to the first controller that is communicatively connected to the second controller. In the energy storage unit, the first controller is further configured to: after controlling the first switch to be turned on or off, and when not receiving the first voltage change rule sent by the second controller that is communicatively connected to the first controller, output the signal indicating a communication connection error. This avoids checking communication connections between the energy storage units and the power converters one by one, and greatly improves communication connection checking efficiency. In addition, no additional hardware is required, and normal communication between other devices is not affected, so that communication connection checking accuracy is high.

In a possible implementation, the first controllers in the plurality of energy storage units are configured to simultaneously control the first switches to be turned on or off, so that direct current voltages output by the direct current power supplies in the plurality of energy storage units simultaneously change according to different voltage change rules. Whether a connection abnormality occurs in communication cables between all battery clusters and converters in the power supply system is simultaneously determined in one detection period, to further improve communication connection checking efficiency.

In a possible implementation, the first controller in any energy storage unit is configured to control the first switch to be turned on or off at first frequency, so that the direct current voltage output by the direct current power supply periodically changes at the first frequency. The second controller in the power converter corresponding to the any energy storage unit is configured to obtain the first frequency at which the direct current voltage received by the power conversion circuit periodically changes, and send, through the communication connection, the first frequency to the first controller that is communicatively connected to the second controller. The first controller in the any energy storage unit is further configured to: when not receiving the first frequency sent by the second controller that is communicatively connected to the first controller, output the signal indicating a communication connection error. The controller controls, based on the specified frequency, an action of the first switch, so that the direct current voltage sent by the energy storage unit to the corresponding power converter also changes at the specified frequency, and determines, based on information about the frequency obtained through a communication cable, whether a communication cable and a current converter with a power connection are connected and match. This operation is simple and efficient, no additional hardware is required, and normal communication between other devices is not affected, so that communication connection checking accuracy is high.

In a possible implementation, the energy storage unit further includes a first resistor and a second switch, the first resistor is connected in series to the first switch, and the second switch is connected in parallel to two ends of the first resistor and the first switch that are connected in series. The controller controls, based on the specified frequency, an action of the first switch, so that the direct current voltage sent by the energy storage unit to the corresponding power converter also changes at the specified frequency, and determines, based on the information about the frequency obtained through the communication cable, whether the communication cable and the current converter with a power connection are connected and match. This has high communication connection checking accuracy.

In a possible implementation, the first controller is configured to: when the first switch is turned on and an absolute value of a voltage difference between two ends of the first switch is less than a voltage threshold, control the second switch to be turned on. In a working process of the energy storage unit, when the first switch is turned on, and the voltage difference between the two ends of the first switch is close to zero, the controller controls the second switch to be turned on, to avoid an excessively large voltage difference between two ends of each switch in the working process of the energy storage unit.

In a possible implementation, the energy storage unit further includes a first resistor, a second resistor, a second switch, and a third switch, the second resistor is connected in series to the first resistor and the third switch, and the first switch is connected in parallel to two ends of the second resistor. The first controller in the any energy storage unit is configured to control the third switch to be turned on, and control the first switch to be turned on or off at the first frequency, so that the direct current voltage output by the direct current power supply periodically changes at the first frequency. This avoids excessively large change amplitude of the output voltage of the energy storage unit before and after the third switch is turned on, to protect the switches in the energy storage unit.

In a possible implementation, the power conversion circuit in each power converter includes at least one switch. In the power converter, the second controller is configured to control the at least one switch to be turned on or off, so that a direct current output by the direct current power supply in the energy storage unit corresponding to the power converter changes according to a first current change rule. In the power converter, the second controller is further configured to obtain the first current change rule received by the power conversion circuit, and send, through the communication connection, the first current change rule to the first controller that is communicatively connected to the second controller. In the energy storage unit, the first controller is configured to: obtain the first current change rule of the direct current output by the direct current power supply, and when not receiving the first current change rule sent by the second controller that is communicatively connected to the first controller, output the signal indicating a communication connection error. This avoids checking communication connections between the energy storage units and the power converters one by one, and greatly improves communication connection checking efficiency. In addition, no additional hardware is required, and normal communication between other devices is not affected, so that communication connection checking accuracy is high.

In a possible implementation, the second controllers in the plurality of power converters are configured to simultaneously control the at least one switch to be turned on or off, so that direct currents output by the direct current power supplies in the plurality of energy storage units corresponding to the plurality of power converters simultaneously change according to different current change rules. Whether a connection abnormality occurs in communication cables between all battery clusters and converters in the power supply system is simultaneously determined in one detection period, to further improve communication connection checking efficiency.

In a possible implementation, in any one of the plurality of power converters, the second controller is configured to control the at least one switch to be turned on or off, so that a magnitude of the direct current output by the direct current power supply in the energy storage unit corresponding to the any power converter is a first current value. In the any power converter, the second controller is further configured to obtain the first current value of the direct current received by the power conversion circuit, and send, through the communication connection, the first current value to the first controller that is communicatively connected to the second controller. The first controller in the energy storage unit corresponding to the any power converter is configured to: obtain the first current value of the direct current output by the direct current power supply, and when not receiving the first current value sent by the second controller that is communicatively connected to the first controller, output the signal indicating a communication connection error. The controller in the power converter controls, based on the specified frequency, the action of the first switch, so that the direct current voltage sent by the energy storage unit to the corresponding power converter also changes at the specified frequency, and determines, based on the information about the frequency obtained through the communication cable, whether the communication cable and the current converter with a power connection are connected and match. This operation is simple and efficient, no additional hardware is required, and normal communication between other devices is not affected, so that communication connection checking accuracy is high. The second controller in the power converter controls, based on the specified frequency, an action of the at least one switch in the power conversion circuit, so that a magnitude of a direct current sent by the energy storage unit to the power converter is a first current value. Therefore, the first controller in the energy storage unit determines, based on the current value of the direct current sent by the energy storage unit to the power converter, and a current value obtained through the communication cable, whether the communication cable and the current converter with a power connection are connected and match. This operation is simple and efficient, no additional hardware is required, and normal communication between other devices is not affected, so that communication connection checking accuracy is high.

In a possible implementation, in any one of the plurality of power converters, the second controller is configured to control the at least one switch to be turned on or off, so that the direct current output by the direct current power supply in the energy storage unit corresponding to the any power converter periodically changes at the first frequency. In the any power converter, the second controller is further configured to obtain the first frequency at which the direct current received by the power conversion circuit periodically changes, and send, through the communication connection, the first frequency to the first controller that is communicatively connected to the second controller. The first controller in the energy storage unit corresponding to the any power converter is configured to: obtain the first frequency at which the direct current output by the direct current power supply periodically changes, and when not receiving the first frequency sent by the second controller that is communicatively connected to the first controller, output the signal indicating a communication connection error. The second controller in the power converter controls, based on the specified frequency, an action of the at least one switch in the power conversion circuit, so that the direct current sent by the energy storage unit to the power converter changes at the specified frequency. Therefore, the first controller in the energy storage unit determines, based on the frequency of the direct current sent by the energy storage unit to the power converter, and information about the frequency obtained through the communication cable, whether the communication cable and the current converter with a power connection are connected and match. This operation is simple and efficient, no additional hardware is required, and normal communication between other devices is not affected, so that communication connection checking accuracy is high.

In a possible implementation, the energy storage unit and the power converter respectively include a first communication port and a second communication port, and first communication ports of the plurality of energy storage units are configured to be connected to second communication ports of the plurality of power converters through communication cables. In the power converter, the second controller is configured to transmit, through a communication cable connected to the second communication port, the first electrical signal change rule to the first controller that is communicatively connected to the second controller. In the energy storage unit, the first controller is configured to: when not receiving, through the communication cable connected to the first communication port, the first electrical signal change rule sent by the second controller that is communicatively connected to the first controller, output the signal indicating a communication connection error.

In a possible implementation, the power supply system includes an upper-level controller, and the upper-level controller is configured to obtain the first electrical signal change rule obtained by any one of the plurality of energy storage units and a second electrical signal change rule that is received by the any energy storage unit from the second controller that is communicatively connected to the any energy storage unit. The upper-level controller is configured to: when the first electrical signal change rule is different from the second electrical signal change rule, output information about a communication connection between the any energy storage unit and a power converter corresponding to an energy storage unit that sends the second electrical signal change rule. The power supply system obtains, by using the upper-level controller, the voltage change rules sent by the direct current power supplies in the energy storage units and voltage change rules received through the communication connections, so that when a communication connection abnormality occurs, the upper-level controller locates a specific location at which a connection error occurs in a communication cable in the energy storage units. This further improves communication connection checking efficiency, and greatly facilitates recovery of a communication connection abnormality.

In a possible implementation, the upper-level controller is configured to obtain, through the communication connection, the first electrical signal change rule and the second electrical signal change rule that are sent by any one of the plurality of energy storage units.

In a possible implementation, the energy storage unit includes a first communication port, first communication ports of the plurality of energy storage units are configured to be connected to the upper-level controller through communication cables, and the upper-level controller is configured to obtain, through the communication cable, the first electrical signal change rule and the second electrical signal change rule that are sent by any one of the plurality of energy storage units.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a schematic of a structure of a power supply system according to this application;
FIG. 4 is a schematic of another structure of a power supply system according to this application;
FIG. 5 is a schematic of another structure of a power supply system according to this application;
FIG. 6 is a schematic of another structure of a power supply system according to this application;
FIG. 7 is a schematic of another structure of a power supply system according to this application;
FIG. 8 is a schematic of another structure of a power supply system according to this application;
FIG. 9 is a schematic of another structure of a power supply system according to this application; and
FIG. 10 is a schematic of another structure of a power supply system according to this application.

### DESCRIPTION OF EMBODIMENTS

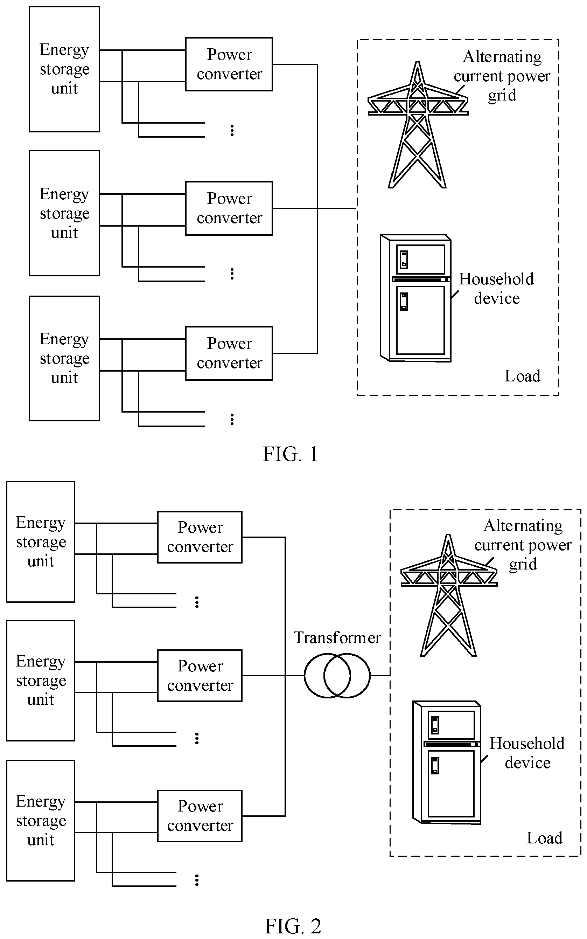

FIG. 1 is a diagram of an application scenario of a power supply system according to this application. The power supply system provided in this application may include a plurality of energy storage units and a plurality of power converters. The energy storage unit includes a direct current power supply and a controller (not shown in FIG. 1). The direct current power supply in each energy storage unit is electrically connected to at least one corresponding power converter through a power cable, and an output end of each power converter is connected to a load. The power converter may invert a direct current provided by the direct current power supply, and output an alternating current to the load. The load may be an alternating current power grid or an alternating current power-consuming device. When the power converter is grid-connected, the load may be an alternating current power grid. When the power converter is off-the-grid, the load may be an alternating current power-consuming device like a household device.

In some feasible implementations, the power supply system may include a transformer. FIG. 2 is a diagram of another application scenario of a power supply system according to this application. The output end of each power converter may be connected to the load via the transformer. The transformer may transform (which may be a boost, a buck, or the like) an alternating current provided by the power converter, and supply a transformed alternating current to the load.

In the application scenario of the power supply system shown in FIG. 1 or FIG. 2, the direct current power supply in each energy storage unit is electrically connected to the at least one corresponding power converter through the power cable, and the power converter obtains, through the power cable, the direct current provided by the direct current power supply. In addition, a communication connection is further included between the energy storage unit and the power converter, to transmit information such as a power scheduling instruction between the energy storage unit and the power converter. For example, the energy storage unit sends, through the communication connection, the power scheduling instruction to the power converter that has a power connection to the energy storage unit, and obtains, through the communication connection, information about power actually output by the corresponding power converter. The communication connection between the energy storage unit and the power converter may be a wired communication connection or a wireless communication connection. In a process of configuring the energy storage units and the power converters in the power supply system, a connection error may occur in a power cable and a communication cable between the energy storage unit and the power converter. For example, the communication connection between the energy storage unit and the power converter is a wired communication connection. When one energy storage unit is connected to one power converter through a power cable, and the energy storage unit is connected to another power converter through a communication cable, the power cable and the communication cable between the energy storage unit and the power converter incorrectly match and are incorrectly connected. When the power cable and the communication cable between the energy storage unit and the power converter in the power supply system incorrectly match and are incorrectly connected, the energy storage unit cannot normally communicate with the corresponding power converter, and the energy storage unit cannot correctly schedule the power converter to perform charging and discharging. In the current power supply system, when a connection error occurs in the power cables and the communication cables between the energy storage units and the power converters, connections between the energy storage units and the power converters are manually checked one by one, which is labor--consuming, time-consuming, and not efficient.

In the power supply system provided in this application, each energy storage unit is electrically connected to at least one corresponding power converter, each energy storage unit includes a direct current power supply and a first controller, and each power converter includes a power conversion circuit and a second controller. Specifically, in the energy storage unit, the direct current power supply is configured to output an electrical signal to the power conversion circuit in the power converter corresponding to the energy storage unit. The electrical signal output by the direct current power supply may be a plurality of types of information such as a voltage signal or a current signal. In the power converter, the second controller is configured to obtain the first electrical signal change rule of the electrical signal received by the power conversion circuit, and send, through the communication connection, the first electrical signal change rule to the first controller that is communicatively connected to the second controller. It may be understood that the first electrical signal change rule may be that the first controller in the energy storage unit controls an action of the switch included in the energy storage unit, so that the electrical signal output by the direct current power supply to the power conversion circuit in the power converter corresponding to the energy storage unit changes according to the first electrical signal change rule. Alternatively, the first electrical signal change rule may be that the second controller in the power converter controls an action of the switch included in the power conversion circuit, so that the electrical signal output by the direct current power supply to the power conversion circuit in the power converter corresponding to the energy storage unit changes according to the first electrical signal change rule. The first electrical signal change rule may be a change rule of a frequency of a voltage, a frequency of a current, a magnitude of a current, or the like. Further, in the energy storage unit, the first controller is configured to: obtain a first electrical signal change rule of the electrical signal output by the direct current power supply; and when not receiving the first electrical signal change rule sent by the second controller that is communicatively connected to the first controller, determine that a communication connection error occurs. In other words when the first electrical signal change rule received from the second controller that is communicatively connected to the first controller is inconsistent with the obtained first electrical signal change rule, the first controller determines that a communication connection error occurs, and outputs the signal indicating a communication connection error. This avoids checking communication connections between the energy storage units and the power converters one by one, and greatly improves communication connection checking efficiency. In addition, no additional hardware is required, and normal communication between other devices is not affected, so that communication connection checking accuracy is high.

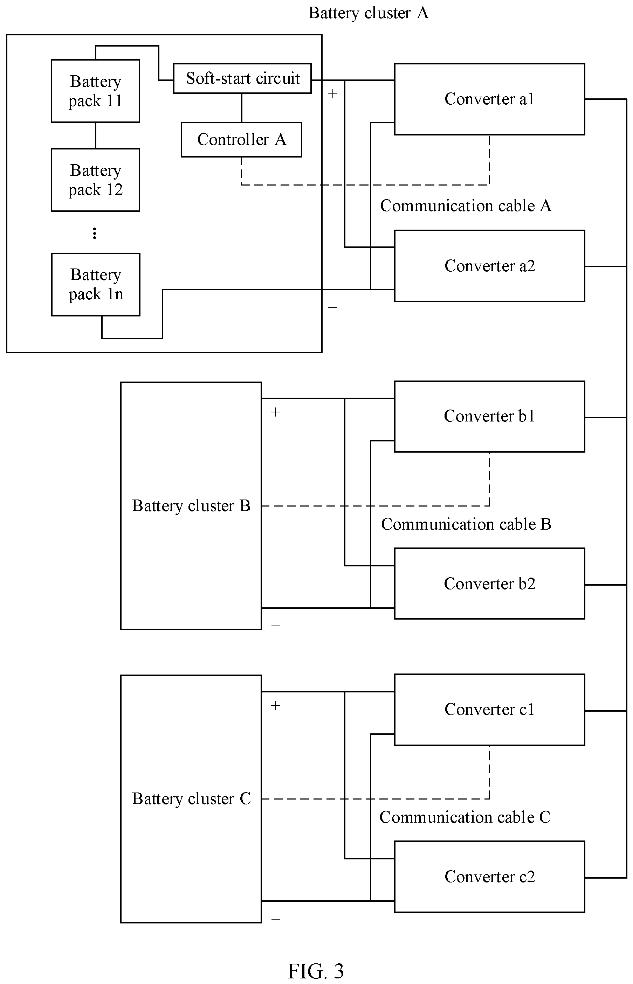

In some feasible implementations, the energy storage unit in the power supply system is a battery cluster, and the power converter in the power supply system is a converter. FIG. 3 is a schematic of a structure of a power supply system according to this application. The power supply system shown in FIG. 3 includes a plurality of battery clusters and a plurality of converters. Each battery cluster includes a direct current power supply and a first controller, and the direct current power supply is a plurality of battery packs connected in series. For example, a battery cluster A includes a battery pack 11, a battery pack 12, ..., and a battery pack 1n that are connected in series and a controller A. The direct current power supply in each battery cluster is connected to an input end of at least one converter through a power cable. For example, the direct current power supply in the battery cluster is connected to two converters through power cables. One end of the battery pack 11 in the battery cluster A may be used as a positive electrode of the direct current power supply in the battery cluster, and is electrically connected to a positive input end of a converter a1 and a positive input end of a converter a2 through the power cables. One end of the battery pack 1n may be used as a negative electrode of the direct current power supply in the battery cluster, and is electrically connected to a negative input end of the converter a1 and a negative input end of the converter a2 through the power cables. Output ends of the converter a1 and the converter a2 may be connected to a transformer or a load. Internal circuit structures of a battery cluster B and a battery cluster C are similar to that of the battery cluster A, and connection manners in which the battery cluster B is electrically connected to a converter b1 and a converter b2 and the battery cluster C is electrically connected to a converter c1 and a converter c2 are also similar to a connection manner in which the battery cluster A is connected to the converter a1 and the converter a2. Details are not described herein again. In addition, a communication connection is further included between the battery cluster and the converter, to transmit information such as a power scheduling instruction between the battery cluster and the converter. For example, the battery cluster A sends, through the communication connection, the power scheduling instruction to the converter a1 and the converter a2 that have power connections to the battery cluster A, and obtains, through the communication connection, information about power actually output by the converter a1 and the converter a2. The communication connection between the battery cluster and the converter in the power supply system may be a wired communication connection or a wireless communication connection. Still refer to FIG. 3. When the communication connection between the battery cluster and the converter is a wired communication connection, the battery cluster A may be connected to the converter a1 through a communication cable A. For example, a communication port of the battery cluster A may be connected to a communication port of the converter a1 through the communication cable A. The controller A in the battery cluster A is connected to the communication cable A. The controller A sends the power scheduling instruction to the converter a1 through the communication cable A, or obtains, through the communication cable A, information about power output by the converter a1. Because a communication connection (a wired communication connection or a wireless communication connection) is established between the converter a1 and the converter a2, the converter a2 may receive the power scheduling instruction and the information about the output power from the controller A by using the converter a1. Similarly, the battery cluster B and the battery cluster C are respectively connected to the converter b1 and the converter c1 through a communication cable B and a communication cable C. For a process in which the battery cluster B communicates with the converter b1 and the converter b2 and a process in which the battery cluster C communicates with the converter c1 and the converter c2, refer to the foregoing descriptions about the battery cluster A. Details are not described herein again.

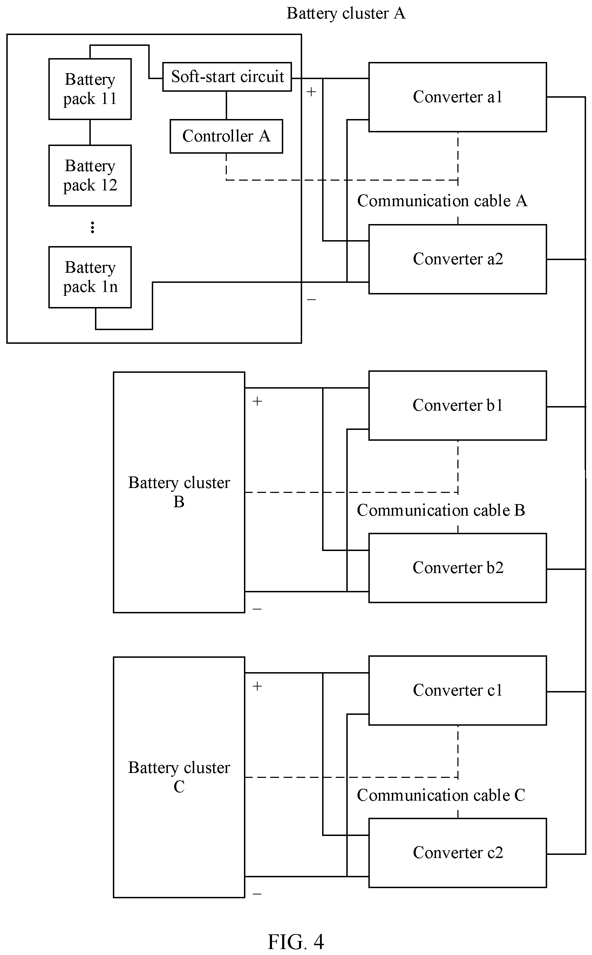

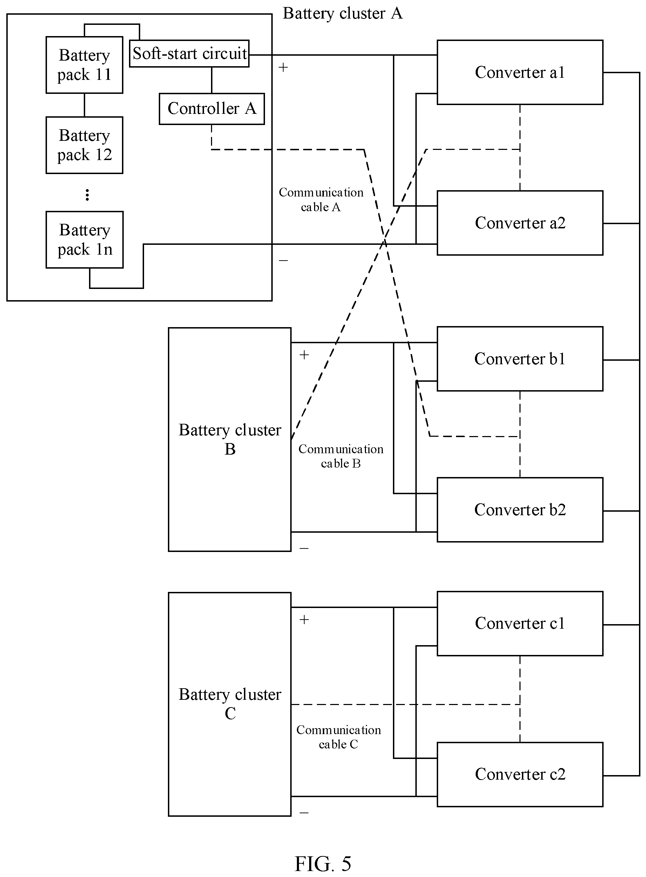

Optionally, when the communication connection between the battery cluster and the converter is a wired communication connection, each battery cluster in the power supply system may be connected, through a communication cable, to all converters that have power connections to the battery cluster. FIG. 4 is a schematic of another structure of a power supply system according to this application. In the power supply system shown in FIG. 4, the battery cluster A may be connected to the converter a1 and the converter a2 through the communication cable A. For example, the communication port of the battery cluster A may be connected to the communication port of the converter a1 and a communication port of the converter a2 through the communication cable A. The controller A in the battery cluster A is connected to the communication cable A. The controller A sends power scheduling instructions to the converter a1 and the converter a2 through the communication cable A, or obtains, through the communication cable A, information about power output by the converter a1 and the converter a2. Similarly, in FIG. 4, the battery cluster B is connected to the converter b1 and the converter b2 through the communication cable B, and the battery cluster C is connected to the converter c1 and the converter c2 through the communication cable C. For a process in which the battery cluster B communicates with the converter b1 and the converter b2 and a process in which the battery cluster C communicates with the converter c1 and the converter c2, refer to the foregoing descriptions about the battery cluster A. Details are not described herein again. When the power cable and the communication cable between the battery cluster and the converter in the power supply system incorrectly match and are incorrectly connected, the battery cluster cannot normally communicate with the corresponding converter. FIG. 5 is a schematic of another structure of a power supply system according to this application. In the power supply system shown in FIG. 5, the battery cluster A is electrically connected to the converter a1 and the converter a2 through power cables, the battery cluster B is electrically connected to the converter b1 and the converter b2 through power cables, and the battery cluster C is electrically connected to the converter c1 and the converter c2 through power cables. However, the battery cluster A is connected to the converter b1 and the converter b2 through the communication cable A, the battery cluster B is connected to the converter a1 and the converter a2 through the communication cable B, and the battery cluster C is connected to the converter c1 and the converter c2 through the communication cable C. In other words, a connection error occurs in communication cables of the battery cluster A and the battery cluster B.

In some feasible implementations, each energy storage unit includes a first switch, and in the energy storage unit, the direct current power supply is configured to output, via the first switch, a direct current voltage to a power conversion circuit in the power converter corresponding to the energy storage unit. In the energy storage unit, a first controller controls an action of the first switch included in the energy storage unit, so that an electrical signal output by the direct current power supply to the power conversion circuit in the power converter corresponding to the energy storage unit changes according to a first voltage change rule. In the power supply systems shown in FIG. 3, FIG. 4, and FIG. 5, the power cable between the direct current power supply in the battery cluster and the positive input end of the converter may include a soft-start circuit, or the power cable between the direct current power supply in the battery cluster and the negative input end of the converter may include a soft-start circuit. For example, the power cable between the direct current power supply and the positive input end of the converter includes a soft-start circuit. Still refer to FIG. 3, FIG. 4, and FIG. 5. The battery cluster A includes the battery pack 11, the battery pack 12, ..., and the battery pack 1n that are connected in series, the controller A, and the soft-start circuit. One end of the battery pack 11 is connected to the positive input end of the converter a1 and the positive input end of the converter a2 through the power cables, and the soft-start circuit is located on the power cable between the battery pack 11 and the positive input end of the converter a1. The soft-start circuit may include the first switch. The controller A in the battery cluster A controls the first switch to be turned on or off, so that a direct current that is output, to the converter a1 and the converter a2, by the battery pack connected in series changes according to the first voltage change rule. For example, the controller A may control an action of the first switch in the soft-start circuit, so that the direct current that is output, to the converter a1 and the converter a2, by the battery pack connected in series periodically changes at first frequency. Then, the controller A obtains a second frequency through the communication cable A. The controller A compares whether the first frequency is consistent with the second frequency, and determines, based on a comparison result, whether a connection abnormality occurs in the communication cable between the current battery cluster A and the converter a1 and the converter a2. Because the battery cluster A is connected to the converter b1 and the converter b2 through the communication cable A, the second frequency obtained by the controller A through the communication cable A is actually a voltage frequency obtained by the converter b1 and the converter b2, and the voltage frequency obtained by the converter b1 and the converter b2 is a voltage frequency output by the battery cluster B. Voltage frequencies output by the battery cluster A and the battery cluster B are different. In this case, when the controller A detects, through comparison, that the first frequency is inconsistent with the second frequency; or when the controller A detects that an absolute value of a difference between the first frequency and the second frequency is greater than a specified threshold, the controller A determines that a connection abnormality occurs in the communication cable between the current battery cluster A and the converter a1 and the converter a2. Similarly, a controller B (not shown in FIG. 5) in the battery cluster B may control a soft-start circuit connected to the controller B, so that a voltage frequency output, to the converter b1 and the converter b2, by the battery pack connected in series is the first frequency. Then, the controller B obtains the second frequency through the communication cable B. The controller B compares whether the first frequency is consistent with the second frequency, and determines, based on a comparison result, whether a connection abnormality occurs in the communication cable between the current battery cluster B and the converter b1 and the converter b2. Because the battery cluster B is connected to the converter a1 and the converter a2 through the communication cable B, the second frequency obtained by the controller B through the communication cable B is actually a voltage frequency obtained by the converter a1 and the converter a2, and the voltage frequency obtained by the converter a1 and the converter a2 is a voltage frequency output by the battery cluster A. The voltage frequencies output by the battery cluster A and the battery cluster B are different. In this case, when the controller B detects that the absolute value of the difference between the first frequency and the second frequency is greater than the specified threshold, that is, information about the first frequency is not received, the controller B determines that a connection abnormality occurs in the communication cable between the current battery cluster B and the converter b1 and the converter b2. A process in which the controller C in the battery cluster C determines whether a connection abnormality occurs in the communication cable between the current battery cluster C and the converter c1 and the converter c2 is similar to the foregoing descriptions about the battery cluster A and the battery cluster B. Details are not described herein again. The controller A may send information indicating that an abnormality occurs in communication connection between the battery cluster A and the converter a1 and the converter a2, and the controller B may send information indicating that an abnormality occurs in communication connection between the battery cluster B and the converter b1 and the converter b2. This is convenient to check communication connections between the battery clusters and the converters in the power supply system, avoids checking communication connections between the battery clusters and the converters one by one, and greatly improves communication connection checking efficiency. In addition, no additional hardware is required, and normal communication between other devices is not affected, so that communication connection checking accuracy is high.

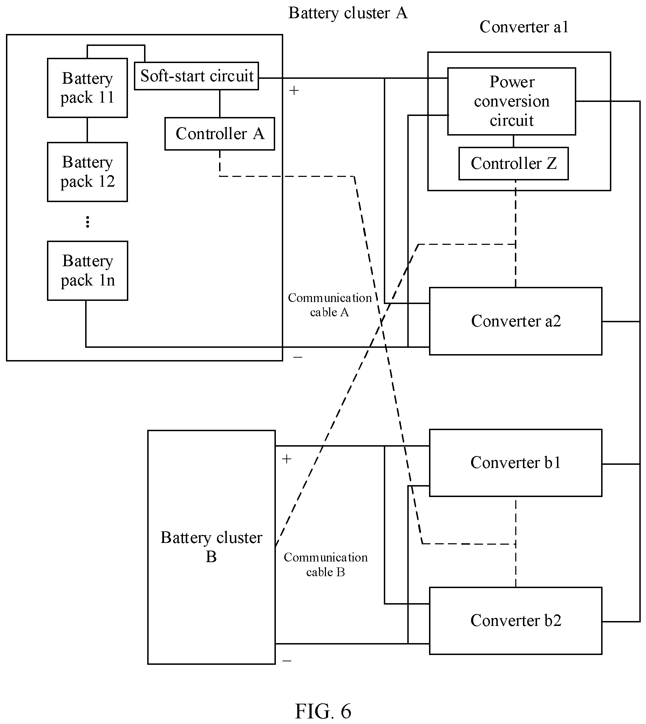

In some feasible implementations, the converter in the power supply system includes the power conversion circuit and a second controller, and the power conversion circuit is configured to convert a direct current output by the battery cluster into an alternating current. FIG. 6 is a schematic of another structure of a power supply system according to this application. In the power supply system shown in FIG. 6, the converter a1 that has a power connection to the battery cluster A includes a power conversion circuit and a controller Z. The power conversion circuit is configured to convert a direct current output by the battery cluster A into an alternating current, and output the alternating current to the transformer or the load. The controller A in the battery cluster A may communicate with the controller Z in the converter a1 through a communication connection. For example, the communication connection between the controller A and the controller Z is a wired communication connection. Still refer to FIG. 6. The controller A may control the first switch in the soft-start circuit to be turned on or off at the first frequency, so that the direct current that is output, to the converter a1 and the converter a2, by the battery pack connected in series periodically changes at the first frequency. In the converter a1, the controller Z obtains information about the first frequency at which the direct current received by the power conversion circuit periodically changes. Because the battery cluster A is connected to the converter b1 and the converter b2 through the communication cable A, and the battery cluster B is connected to the converter a1 and the converter a2 through the communication cable B in FIG. 6, the controller Z outputs the information about the first frequency to the battery cluster B through the communication cable B. Because a connection error occurs in the communication cables, the controller A receives information about the second frequency from the converter b1 and the converter b2 through the communication cable A. The information about the second frequency becomes the voltage frequency obtained by the converter b1 and the converter b2 from the battery cluster B. The controller A finds, through comparison, that the information about the first frequency is inconsistent with the information about the second frequency, and determines that a connection abnormality occurs in the communication cable between the current battery cluster A and the converter a1 and the converter a2. A process in which the controller B in the battery cluster B determines whether a connection abnormality occurs in the communication cable between the current battery cluster B and the converter b1 and the converter b2 is similar to the foregoing descriptions about the battery cluster A. Details are not described herein again. The second controller in the converter obtains the voltage change rule received by the corresponding power conversion circuit, and outputs, through the communication connection, the voltage change rule to the corresponding first controller that is electrically connected to the second controller and that is in the battery cluster, or transmits the voltage change rule to a first controller in another battery cluster. Therefore, each battery cluster compares, by using the first controller, a voltage change rule controlled by the battery cluster with the obtained voltage change rule, to determine whether an abnormality occurs in communication matching of the current converter with a power connection.

In some feasible implementations, the first controllers in the plurality of energy storage units in the power supply system are configured to simultaneously control the corresponding first switches to be turned on or off, so that direct currents output by the direct current power supplies in the plurality of energy storage units to the power conversion circuits in the power converters corresponding to the energy storage units simultaneously change according to different voltage change rules. The energy storage units perform comparison based on voltage change rules fed back by the power converters, to determine whether communication connection abnormality occurs currently. Still refer to the power supply system shown in FIG. 6. The controller A in the battery cluster A may control an action of the first switch in the corresponding soft-start circuit based on a frequency f1, so that the direct current that is output, to the converter a1 and the converter a2, by the battery pack connected in series periodically changes at the frequency f1. In addition, the controller B (not shown in FIG. 6) in the battery cluster B may control an action of the first switch in the corresponding soft-start circuit based on a frequency f2, so that a direct current that is output, to the converter b1 and the converter b2, by the battery pack connected in series periodically changes at the frequency f2. The controller in the converter a1 or the controller in the converter a2 obtains the frequency f1 at which the direct current received by the power conversion circuit periodically changes, and the controller in the converter b1 or the controller in the converter b2 obtains the frequency f2 at which the direct current received by the power conversion circuit periodically changes. Because the battery cluster A is connected to the converter b1 and the converter b2 through the communication cable A, and the battery cluster B is connected to the converter a1 and the converter a2 through the communication cable B in FIG. 6, the controller in the converter a1 or the controller in the converter a2 outputs the obtained frequency f1 to the battery cluster B through the communication cable B, and the controller in the converter b1 or the controller in the converter b2 outputs the obtained frequency f2 to the battery cluster A through the communication cable A. The controller A finds, through comparison, that the frequency f1 is inconsistent with the frequency f2, and determines that a connection abnormality occurs in the communication cable between the current battery cluster A and the converter a1 and the converter a2. The controller B finds, through comparison, that the frequency f1 is inconsistent with the frequency f2, and determines that a connection abnormality occurs in the communication cable between the current battery cluster B and the converter b1 and the converter b2. Whether a connection abnormality occurs in communication cables between all battery clusters and converters in the power supply system may be simultaneously determined in one detection period, to further improve communication connection checking efficiency.

In some feasible implementations, the power conversion circuit in each power converter includes at least one switch. In the power converter, the second controller controls an action of the at least one switch included in the power conversion circuit, so that an electrical signal output by the direct current power supply to the power conversion circuit in the power converter corresponding to the energy storage unit changes according to a first current change rule. The at least one switch included in the power conversion circuit may be a switching transistor of a bridge arm of the power conversion circuit. Still refer to FIG. 6. The controller Z in the converter a1 controls the at least one switch in the power conversion circuit to be turned on or off, so that a direct current that is output, to the converter a1 and the converter a2, by the battery pack connected in series in the battery cluster A changes according to the first current change rule. For example, the controller Z may control an action of the at least one switch in the power conversion circuit, so that a magnitude of the direct current that is output, to the converter a1 and the converter a2, by the battery pack connected in series is a first current value. Then, the controller Z obtains the first current value of the direct current received by the power conversion circuit. Because the battery cluster A is connected to the converter b1 and the converter b2 through the communication cable A, and the battery cluster B is connected to the converter a1 and the converter a2 through the communication cable B in FIG. 6, the controller Z outputs, through the communication cable B, the information about the first current value to the battery cluster B. The controller A in the battery cluster A may obtain the first current value, output by the battery pack, of the direct current. Because a connection error occurs in the communication cables, the controller A receives information about a second current value from the converter b1 through the communication cable A. The information about the second current value becomes the current value obtained by the converter b1 and the converter b2 from the battery cluster B. The controller A finds, through comparison, that the information about the first current value is inconsistent with the information about the second current value, and determines that a connection abnormality occurs in the communication cable between the current battery cluster A and the converter a1 and the converter a2. A process in which the controller B in the battery cluster B determines whether a connection abnormality occurs in the communication cable between the current battery cluster B and the converter b1 and the converter b2 is similar to the foregoing descriptions about the battery cluster A. Details are not described herein again. The controller A may send information indicating that an abnormality occurs in communication connection between the battery cluster A and the converter a1 and the converter a2, and the controller B may send information indicating that an abnormality occurs in communication connection between the battery cluster B and the converter b1 and the converter b2. This is convenient to check communication connections between the battery clusters and the converters in the power supply system, avoids checking communication connections between the battery clusters and the converters one by one, and greatly improves communication connection checking efficiency. In addition, no additional hardware is required, and normal communication between other devices is not affected, so that communication connection checking accuracy is high.

In some feasible implementations, the power conversion circuit in each power converter includes at least one switch. In the power converter, the second controller controls an action of the at least one switch included in the power conversion circuit, so that an electrical signal output by the direct current power supply to the power conversion circuit in the power converter corresponding to the energy storage unit changes according to a first current change rule. The at least one switch included in the power conversion circuit may be a switching transistor of a bridge arm of the power conversion circuit. Still refer to FIG. 6. The controller Z in the converter a1 controls the at least one switch in the power conversion circuit to be turned on or off, so that a direct current that is output, to the converter a1 and the converter a2, by the battery pack connected in series in the battery cluster A periodically changes at the first frequency. For example, the controller Z may control an action of the at least one switch in the power conversion circuit, so that the direct current that is output, to the converter a1 and the converter a2, by the battery pack connected in series periodically changes at the first frequency. Then, the controller Z obtains the first frequency at which the direct current received by the power conversion circuit changes. Because the battery cluster A is connected to the converter b1 and the converter b2 through the communication cable A, and the battery cluster B is connected to the converter a1 and the converter a2 through the communication cable B in FIG. 6, the controller Z outputs the information about the first frequency to the battery cluster B through the communication cable B. The controller A in the battery cluster A may obtain the first frequency, output by the battery pack, of the direct current. Because a connection error occurs in the communication cables, the controller A receives information about a second frequency from the converter b1 through the communication cable A. The information about the second frequency becomes the frequency obtained by the converter b1 and the converter b2 from the battery cluster B. The controller A finds, through comparison, that the information about the first frequency is inconsistent with the information about the second frequency, and determines that a connection abnormality occurs in the communication cable between the current battery cluster A and the converter a1 and the converter a2. A process in which the controller B in the battery cluster B determines whether a connection abnormality occurs in the communication cable between the current battery cluster B and the converter b1 and the converter b2 is similar to the foregoing descriptions about the battery cluster A. Details are not described herein again. The controller A may send information indicating that an abnormality occurs in communication connection between the battery cluster A and the converter a1 and the converter a2, and the controller B may send information indicating that an abnormality occurs in communication connection between the battery cluster B and the converter b1 and the converter b2. This is convenient to check communication connections between the battery clusters and the converters in the power supply system, avoids checking communication connections between the battery clusters and the converters one by one, and greatly improves communication connection checking efficiency. In addition, no additional hardware is required, and normal communication between other devices is not affected, so that communication connection checking accuracy is high.

In some feasible implementations, the second controllers in the plurality of power converters in the power supply system are configured to simultaneously control the corresponding at least one switch to be turned on or off, so that direct currents output by the direct current power supplies in the plurality of energy storage units to the power conversion circuits in the power converters corresponding to the energy storage units simultaneously change according to different current change rules. The energy storage units perform comparison based on current change rules fed back by the power converters, to determine whether communication connection abnormality occurs currently. Still refer to the power supply system shown in FIG. 6. The controller Z in the converter a1 controls the at least one switch in the power conversion circuit to be turned on or off, so that a direct current that is output, to the converter a1 and the converter a2, by the battery pack connected in series in the battery cluster A changes according to the first current change rule. For example, the controller Z may control an action of the at least one switch in the power conversion circuit, so that a magnitude of the direct current that is output, to the converter a1 and the converter a2, by the battery pack connected in series is 11. In addition, the controller Y (not shown in FIG. 6) in the converter b1 may control an action of the at least one switch in the power conversion circuit, so that a magnitude of the direct current that is output, to the converter b1 and the converter b2, by the battery pack connected in series is I2. Then, the controller Z obtains the magnitude I1 of the direct current received by the power conversion circuit, and the controller Y obtains the magnitude I2 of the direct current received by the power conversion circuit. Because the battery cluster A is connected to the converter b1 and the converter b2 through the communication cable A, and the battery cluster B is connected to the converter a1 and the converter a2 through the communication cable B in FIG. 6, the controller Z outputs information about the obtained magnitude I1 to the battery cluster B through the communication cable B, and the controller Y outputs information about the obtained magnitude I2 to the battery cluster A through the communication cable A. The controller A in the battery cluster A may obtain the magnitude I1 of the direct current output by the battery pack, and receive the magnitude I2 from the converter b1. The controller in the battery cluster B may obtain the magnitude I2 of the direct current output by the battery pack, and receive the magnitude I1 from the converter a1. The controller A in the battery cluster A finds, through comparison, that I1 is inconsistent with I2, and determines that a connection abnormality occurs in the communication cable between the current battery cluster A and the converter a1 and the converter a2. The controller in the battery cluster B finds, through comparison, that I1 is inconsistent with I2, and determines that a connection abnormality occurs in the communication cable between the current battery cluster B and the converter b1 and the converter b2. Whether a connection abnormality occurs in communication cables between all battery clusters and converters in the power supply system may be simultaneously determined in one detection period, to further improve communication connection checking efficiency.

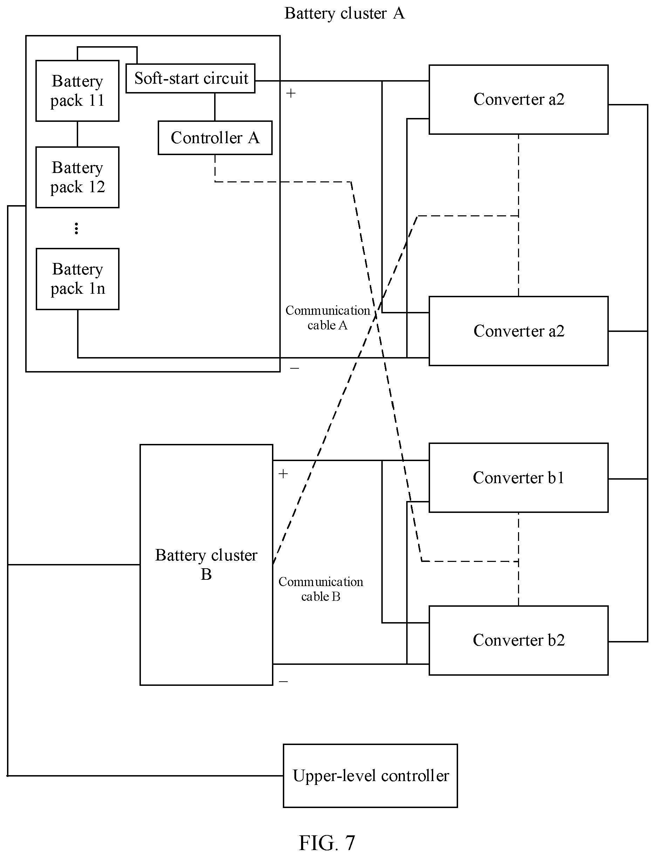

In some feasible implementations, the power supply system includes an upper-level controller, and the upper-level controller is configured to obtain the first electrical signal change rule obtained by any energy storage unit in the power supply system and a second electrical signal change rule that is received by the any energy storage unit from the second controller that is communicatively connected to the any energy storage unit. The second electrical signal change rule may come from the second controller in the power converter corresponding to the any energy storage unit, or a second controller in a power converter corresponding to another energy storage unit in the plurality of energy storage units. The upper-level controller is further configured to: when the first electrical signal change rule is different from the second electrical signal change rule output information about a communication connection between the any energy storage unit and a power converter corresponding to an energy storage unit that sends the second electrical signal change rule. For example, the first electrical signal change rule or the second electrical signal change rule may be as follows: In the energy storage unit, the first controller controls an action of the switch included in the energy storage unit, so that the electrical signal output by the direct current power supply to the power conversion circuit in the power converter corresponding to the energy storage unit changes according to the first voltage change rule or the second electrical signal change rule. FIG. 7 is a schematic of another structure of a power supply system according to this application. In the power supply system shown in FIG. 7, the upper-level controller is separately connected to the battery cluster A and the battery cluster B. The controller A in the battery cluster A controls an action of the first switch corresponding to the soft-start circuit, so that a direct current that is output, to the converter a1 and the converter a2, by the battery pack connected in series changes according to the first voltage change rule. The controller B (not shown in FIG. 7) in the battery cluster B controls an action of the first switch corresponding to the soft-start circuit, so that a direct current that is output, to the converter b1 and the converter b2, by the battery pack connected in series changes according to the second voltage change rule. For example, the controller A controls an action of the first switch in the soft-start circuit, so that the direct current that is output, to the converter a1 and the converter a2, by the battery pack connected in series periodically changes at the first frequency. The controller B controls an action of the first switch in the soft-start circuit, so that the direct current that is output, to the converter b1 and the converter b2, by the battery pack connected in series periodically changes at the second frequency. The controller in the converter a1 or the controller in the converter a2 obtains information about the first frequency at which the direct current received by the corresponding power conversion circuit periodically changes, and the controller in the converter b1 or the controller in the converter b2 obtains information about the second frequency at which the direct current received by the corresponding power conversion circuit periodically changes. Because the battery cluster A is connected to the converter b1 and the converter b2 through the communication cable A, and the battery cluster B is connected to the converter a1 and the converter a2 through the communication cable B in FIG. 7, the controller in the converter a1 or the controller in the converter a2 outputs the obtained information about the first frequency to the battery cluster B through the communication cable B, and the controller in the converter b1 or the controller in the converter b2 outputs the obtained information about the second frequency to the battery cluster A through the communication cable A. The upper-level controller may obtain the voltage change rule sent by the controller A and the received voltage change rule, which are respectively the first frequency and the second frequency, and obtain the voltage change rule sent by the controller B and the received voltage change rule, which are respectively the second frequency and the first frequency. Further, the upper-level controller detects that the voltage change rule sent by the controller A is different from the voltage change rule received by the controller A, where the voltage change rule received by the controller A is the second frequency; and outputs information about a communication connection between the battery cluster A and the converter b1 and the converter b2 that correspond to the battery cluster B that sends the second frequency. The upper-level controller detects that the voltage change rule sent by the controller B is different from the voltage change rule received by the controller B, where the voltage change rule received by the controller B is the first frequency; and outputs information about a communication connection between the battery cluster B and the converter a1 and the converter a2 that correspond to the battery cluster A that sends the first frequency. The power supply system obtains, by using the upper-level controller, the voltage change rules sent by the direct current power supplies in the energy storage units and voltage change rules received through the communication connections, so that when a communication connection abnormality occurs, the upper-level controller locates a specific location at which a connection error occurs in a communication cable in the energy storage units. This further improves communication connection checking efficiency, and greatly facilitates recovery of a communication connection abnormality.

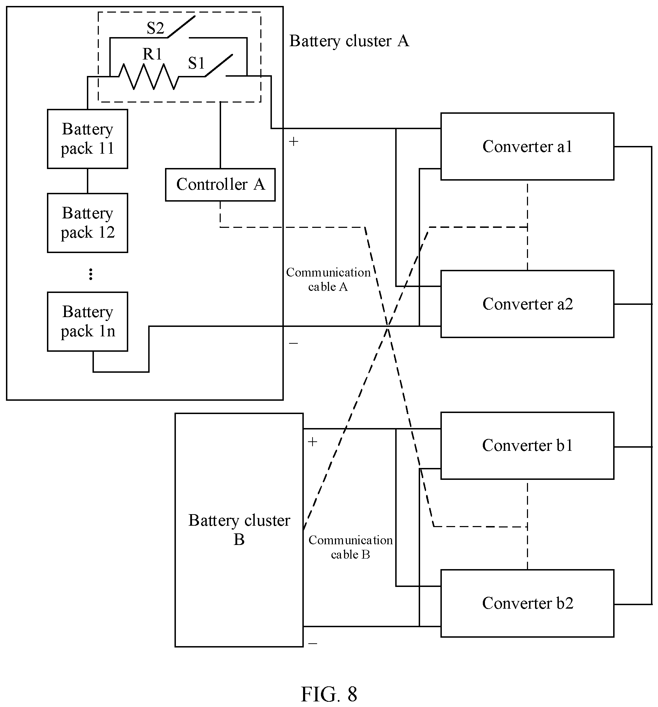

In some feasible implementations, the soft-start circuit in the battery cluster may include the first switch, and the first switch in each battery cluster is connected in series between a positive electrode of the direct current power supply and a positive input end of the converter. FIG. 8 is a schematic of another structure of a power supply system according to this application. In the power supply system shown in FIG. 8, one end of the battery pack 11 is connected to the positive input end of the converter a1 and the positive input end of the converter a2 through power cables, and a switch S1 connected in series is located on a power cable between the battery pack 11 and the positive input end of the converter a1. The switch S1 may be a relay or a switching transistor. The controller A in the battery cluster A controls an action of the switch S1, so that a direct current that is output, to the converter a1 and the converter a2, by the battery pack connected in series, changes according to a specified voltage change rule; and obtains a voltage change rule fed back by the converter a1 or the converter a2. For example, the controller A may control the switch S1 to be turned on or off at the first frequency, so that the direct current that is output, to the converter a1 and the converter a2, by the battery pack connected in series periodically changes at the first frequency. The controller in the converter a1 or the controller in the converter a2 obtains information about the first frequency at which the direct current received by the corresponding power conversion circuit periodically changes. Because the battery cluster A is connected to the converter b1 and the converter b2 through the communication cable A, and the battery cluster B is connected to the converter a1 and the converter a2 through the communication cable B in FIG. 8, the controller in the converter a1 or the controller in the converter a2 outputs the obtained information about the first frequency to the battery cluster B through the communication cable B. Because a connection error occurs in the communication cables, the controller A receives information about the second frequency from the converter b1 and the converter b2 through the communication cable A. The information about the second frequency becomes the voltage frequency obtained by the converter b1 and the converter b2 from the battery cluster B. The controller A finds, through comparison, that the information about the first frequency is inconsistent with the information about the second frequency, and determines that a connection abnormality occurs in the communication cable between the current battery cluster A and the converter a1 and the converter a2. A process in which the controller B in the battery cluster B determines whether a connection abnormality occurs in the communication cable between the current battery cluster B and the converter b1 and the converter b2 is similar to the foregoing descriptions about the battery cluster A. Details are not described herein again. In addition, the soft-start circuit in the battery cluster further includes a first resistor and a second switch. Still refer to FIG. 8. In the power supply system shown in FIG. 8, the soft-start circuit may further include a switch S2 and a resistor R1. The switch S2 may be connected in parallel to two ends of the switch S1 and the resistor R1 that are connected in series. The switch S2 may be a contactor or a switching transistor, and in a working process of the battery cluster A, when the switch S1 is turned on and a voltage difference between two ends of the switch S1 is close to zero, the switch S2 is turned on, to avoid an excessively large voltage difference between two ends of each switch in a working process of the energy storage unit. The controller in the battery cluster controls, based on the specified frequency, the switch in the soft-start circuit, so that a direct current voltage at an input end of the converter that has a power connection to the battery cluster also changes at the specified frequency, and determines, based on information about the frequency obtained through a communication cable, whether a communication cable and a current converter with a power connection are connected and match. This operation is simple and efficient, no additional hardware is required, and normal communication between other devices is not affected, so that communication connection checking accuracy is high.

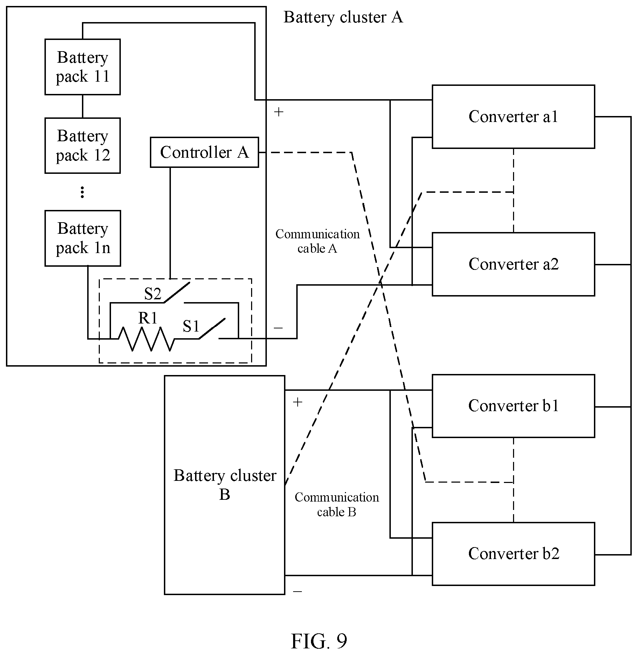

In some feasible implementations, the soft-start circuit in the battery cluster may include the switch, and the switch in each battery cluster is connected in series between a negative electrode of the direct current power supply and a negative input end of the converter. FIG. 9 is a schematic of another structure of a power supply system according to this application. In the power supply system shown in FIG. 9, one end of the battery pack 1n is connected to the negative input end of the converter a1 and the negative input end of the converter a2 through power cables, and the switch S1 and the resistor R1 that are connected in series are located on a power cable between the battery pack 11 and the negative input end of the converter a1. The switch S1 may be a relay. The controller A in the battery cluster A controls an action of the switch S1, so that a direct current that is output, to the converter a1 and the converter a2, by the battery pack connected in series, changes according to a specified voltage change rule; and obtains a voltage change rule fed back by the converter a1 or the converter a2. For a specific process, refer to the descriptions about the power supply system shown in FIG. 8. Details are not described herein again. In addition, in the power supply system shown in FIG. 9, the soft-start circuit may further include a switch S2. The switch S2 may be connected in parallel to two ends of the switch S1 and the resistor R1 that are connected in series. The switch S2 may be a contactor, and in a working process of the battery cluster A, when the switch S1 is turned on and a voltage difference between two ends of the switch S2 is close to zero, the switch S2 is turned on. The controller in the battery cluster controls, based on the specified frequency, the switch in the soft-start circuit, so that a direct current voltage at an input end of the converter that has a power connection to the battery cluster also changes at the specified frequency, and determines, based on information about the frequency obtained through a communication cable, whether a communication cable and a current converter with a power connection are connected and match. This operation is simple and efficient, no additional hardware is required, and normal communication between other devices is not affected, so that communication connection checking accuracy is high.

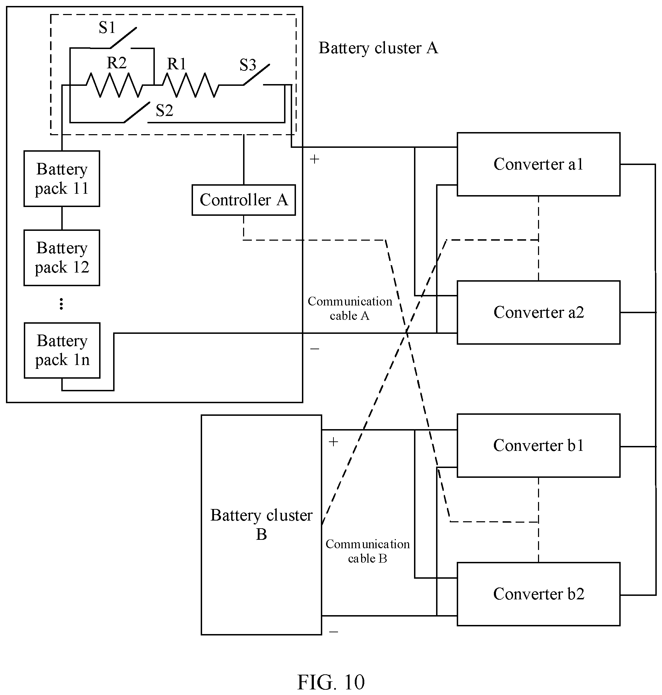

In some feasible implementations, the soft-start circuit in the battery cluster may include a first resistor, a second resistor, the first switch, a second switch, and a third switch, the second resistor is connected in series to the first resistor and the third switch, and the first switch is connected in parallel to two ends of the second resistor. FIG. 10 is a schematic of another structure of a power supply system according to this application. In the power supply system shown in FIG. 10, a resistor R2 is connected in series to the resistor R1 and a switch S3, the switch S2 is connected in parallel to two ends of the resistor R2, the resistor R1, and the switch S3 that are connected in series, and the switch S1 is connected in parallel to two ends of the resistor R2. The controller A in the battery cluster A controls actions of the switch S1 and the switch S3, so that a direct current that is output, to the converter a1 and the converter a2, by the battery pack connected in series, changes according to a specified voltage change rule. For example, the controller A may control the switch S3 to be turned on, and then control the switch S1 to be turned on or off at the first frequency. The controller in the converter a1 or the controller in the converter a2 obtains the information about the first frequency at which the direct current received by the corresponding power conversion circuit periodically changes, and determines, based on the information about the first frequency and the second frequency received through the communication connection, whether a connection abnormality occurs in the communication cable between the current battery cluster A and the converter a1 and the converter a2. After the controller A controls the switch S3 to be turned on, and the switch S1 is turned off, the resistor R1 and the resistor R2 are connected in series to a power connection between the battery cluster A and the converter a1 and the converter a2. When the switch S1 is turned on, the resistor R2 is bypassed, and the direct current voltage that is output, to the converter a1 and the converter a2, by the battery pack connected in series increases. This can avoid excessively large change amplitude of the output voltage of the energy storage unit before and after the switch S1 is turned on, to protect the switch in the soft-start circuit.

In this application, in the power converter in the power supply system, the second controller is configured to obtain a first electrical signal change rule of the electrical signal received by the power conversion circuit, and send, through a communication connection, the first electrical signal change rule to the first controller that is communicatively connected to the second controller. It may be understood that the first electrical signal change rule may be that the first controller in the energy storage unit controls an action of the switch included in the energy storage unit, so that the electrical signal output by the direct current power supply to the power conversion circuit in the power converter corresponding to the energy storage unit changes according to the first electrical signal change rule. Alternatively, the first electrical signal change rule may be that the second controller in the power converter controls an action of the switch included in the power conversion circuit, so that the electrical signal output by the direct current power supply to the power conversion circuit in the power converter corresponding to the energy storage unit changes according to the first electrical signal change rule. The first electrical signal change rule may be a change rule of a frequency of a voltage, a frequency of a current, a magnitude of a current, or the like. Further, in the energy storage unit, the first controller is configured to: obtain a first electrical signal change rule of the electrical signal output by the direct current power supply; and when not receiving the first electrical signal change rule sent by the second controller that is communicatively connected to the first controller, determine that a communication connection error occurs, that is, when the first electrical signal change rule received from the second controller that is communicatively connected to the first controller is inconsistent with the obtained first electrical signal change rule, the first controller determines that a communication connection error occurs, and output the signal indicating a communication connection error. This avoids checking communication connections between the energy storage units and the power converters one by one, and greatly improves communication connection checking efficiency. In addition, no additional hardware is required, and normal communication between other devices is not affected, so that communication connection checking accuracy is high. In addition, the power supply system obtains, by using the upper-level controller, the voltage change rules sent by the direct current power supplies in the energy storage units and respective voltage change rules received through the communication connections, so that when a communication connection abnormality occurs, the upper-level controller locates a specific location at which a connection error occurs in a communication cable in the energy storage units. This further improves communication connection checking efficiency, and greatly facilitates recovery of a communication connection abnormality.

## Claims

1. A power supply system, wherein the power supply system comprises a plurality of energy storage units and a plurality of power converters, each energy storage unit is electrically connected to at least one corresponding power converter, each energy storage unit comprises a direct current power supply and a first controller, and each power converter comprises a power conversion circuit and a second controller;
in the energy storage unit, the direct current power supply is configured to output an electrical signal to the power conversion circuit in the power converter corresponding to the energy storage unit;
in the power converter, the second controller is configured to obtain a first electrical signal change rule of the electrical signal received by the power conversion circuit, and send, through a communication connection, the first electrical signal change rule to the first controller that is communicatively connected to the second controller; and
in the energy storage unit, the first controller is configured to: obtain a first electrical signal change rule of the electrical signal output by the direct current power supply, and when not receiving the first electrical signal change rule sent by the second controller that is communicatively connected to the first controller, output a signal indicating a communication connection error.

2. The power supply system according to claim 1, wherein each energy storage unit comprises a first switch, and in the energy storage unit, the direct current power supply is configured to output, via the first switch, a direct current voltage to the power conversion circuit in the power converter corresponding to the energy storage unit;
in the energy storage unit, the first controller is configured to control the first switch to be turned on or off, so that the direct current voltage output by the direct current power supply changes according to a first voltage change rule; and in another energy storage unit in the plurality of energy storage units, the first controller controls the first switch to be turned off, so that the another energy storage unit in the plurality of energy storage units does not output a direct current voltage, or controls the first switch to be turned on or off, so that a direct current voltage output by the another energy storage unit in the plurality of energy storage units changes according to another voltage change rule;
in the power converter, the second controller is configured to obtain the first voltage change rule received by the power conversion circuit, and send, through the communication connection, the first voltage change rule to the first controller that is communicatively connected to the second controller; and
in the energy storage unit, the first controller is further configured to: after controlling the first switch to be turned on or off, and when not receiving the first voltage change rule sent by the second controller that is communicatively connected to the first controller, output the signal indicating a communication connection error.

3. The power supply system according to claim 2, wherein the first controllers in the plurality of energy storage units are configured to simultaneously control the first switches to be turned on or off, so that direct current voltages output by the direct current power supplies in the plurality of energy storage units simultaneously change according to different voltage change rules.

4. The power supply system according to claim 2 or 3, wherein the first controller in any energy storage unit is configured to control the first switch to be turned on or off at first frequency, so that the direct current voltage output by the direct current power supply periodically changes at the first frequency;
the second controller in the power converter corresponding to the any energy storage unit is configured to obtain the first frequency at which the direct current voltage received by the power conversion circuit periodically changes, and send, through the communication connection, the first frequency to the first controller that is communicatively connected to the second controller; and
the first controller in the any energy storage unit is further configured to: when not receiving the first frequency sent by the second controller that is communicatively connected to the first controller, output the signal indicating a communication connection error.

5. The power supply system according to claim 4, wherein the energy storage unit further comprises a first resistor and a second switch, the first resistor is connected in series to the first switch, and the second switch is connected in parallel to two ends of the first resistor and the first switch that are connected in series.

6. The power supply system according to claim 5, wherein the first controller is configured to: when the first switch is turned on and an absolute value of a voltage difference between two ends of the first switch is less than a voltage threshold, control the second switch to be turned on.

7. The power supply system according to claim 4, wherein the energy storage unit further comprises a first resistor, a second resistor, a second switch, and a third switch, the second resistor is connected in series to the first resistor and the third switch, and the first switch is connected in parallel to two ends of the second resistor; and
the first controller in the any energy storage unit is configured to control the third switch to be turned on, and control the first switch to be turned on or off at the first frequency, so that the direct current voltage output by the direct current power supply periodically changes at the first frequency.

8. The power supply system according to claim 1, wherein the power conversion circuit in each power converter comprises at least one switch;
in the power converter, the second controller is configured to control the at least one switch to be turned on or off, so that a direct current output by the direct current power supply in the energy storage unit corresponding to the power converter changes according to a first current change rule;
in the power converter, the second controller is further configured to obtain the first current change rule received by the power conversion circuit, and send, through the communication connection, the first current change rule to the first controller that is communicatively connected to the second controller; and
in the energy storage unit, the first controller is configured to: obtain the first current change rule of the direct current output by the direct current power supply, and when not receiving the first current change rule sent by the second controller that is communicatively connected to the first controller, output the signal indicating a communication connection error.

9. The power supply system according to claim 8, wherein the second controllers in the plurality of power converters are configured to simultaneously control the at least one switch to be turned on or off, so that direct currents output by the direct current power supplies in the plurality of energy storage units corresponding to the plurality of power converters simultaneously change according to different current change rules.

10. The power supply system according to claim 8 or 9, wherein in any one of the plurality of power converters, the second controller is configured to control the at least one switch to be turned on or off, so that a magnitude of the direct current output by the direct current power supply in the energy storage unit corresponding to the any power converter is a first current value;
in the any power converter, the second controller is further configured to obtain the first current value of the direct current received by the power conversion circuit, and send, through the communication connection, the first current value to the first controller that is communicatively connected to the second controller; and
the first controller in the energy storage unit corresponding to the any power converter is configured to: obtain the first current value of the direct current output by the direct current power supply, and when not receiving the first current value sent by the second controller that is communicatively connected to the first controller, output the signal indicating a communication connection error.

11. The power supply system according to claim 8 or 9, wherein in any one of the plurality of power converters, the second controller is configured to control the at least one switch to be turned on or off, so that the direct current output by the direct current power supply in the energy storage unit corresponding to the any power converter periodically changes at the first frequency;
in the any power converter, the second controller is further configured to obtain the first frequency at which the direct current received by the power conversion circuit periodically changes, and send, through the communication connection, the first frequency to the first controller that is communicatively connected to the second controller; and
the first controller in the energy storage unit corresponding to the any power converter is configured to: obtain the first frequency at which the direct current output by the direct current power supply periodically changes, and when not receiving the first frequency sent by the second controller that is communicatively connected to the first controller, output the signal indicating a communication connection error.

12. The power supply system according to any one of claims 1 to 11, wherein the energy storage unit and the power converter respectively comprise a first communication port and a second communication port, and first communication ports of the plurality of energy storage units are configured to be connected to second communication ports of the plurality of power converters through communication cables;
in the power converter, the second controller is configured to transmit, through the communication cable connected to the second communication port, the first electrical signal change rule to the first controller that is communicatively connected to the second controller; and
in the energy storage unit, the first controller is configured to: when not receiving, through the communication cable connected to the first communication port, the first electrical signal change rule sent by the second controller that is communicatively connected to the first controller, output the signal indicating a communication connection error.

13. The power supply system according to any one of claims 1 to 11, wherein the power supply system comprises an upper-level controller, and the upper-level controller is configured to obtain the first electrical signal change rule obtained by any one of the plurality of energy storage units and a second electrical signal change rule that is received by the any energy storage unit from the second controller that is communicatively connected to the any energy storage unit; and
the upper-level controller is configured to: when the first electrical signal change rule is different from the second electrical signal change rule, output information about a communication connection between the any energy storage unit and a power converter corresponding to an energy storage unit that sends the second electrical signal change rule.

14. The power supply system according to claim 13, wherein the upper-level controller is configured to obtain, through the communication connection, the first electrical signal change rule and the second electrical signal change rule that are sent by any one of the plurality of energy storage units.

15. The power supply system according to claim 14, wherein the energy storage unit comprises a first communication port, first communication ports of the plurality of energy storage units are configured to be connected to the upper-level controller through communication cables, and the upper-level controller is configured to obtain, through the communication cable, the first electrical signal change rule and the second electrical signal change rule that are sent by any one of the plurality of energy storage units.
